# EUROPÄISCHE PATENTANMELDUNG

(11) **EP 4 063 204 A1**
(43) Veröffentlichungstag der Anmeldung: **28.09.2022**
(21) Anmeldenummer: 21165216.9
(22) Anmeldetag: 26.03.2021
(51) Int. Cl.: B60R 25/30, B60P 1/00

(54) **ÜBERWACHEN EINES BELADUNGSVORGANGS UND/ODER EINES ENTLADUNGSVORGANGS**

(71) Anmelder: Schmitz Cargobull AG, 48341 Altenberge (DE)
(72) Erfinder: Mecking, Timo, 48149 Münster (DE); Weyring, Bernd, 48629 Metelen (DE)
(74) Vertreter: Cohausz & Florack

(57) **Zusammenfassung**

Es wird ein Verfahren offenbart, wobei das Verfahren zumindest zwei Durchgänge der folgenden Schritte umfasst:
- Empfangen (302) einer oder mehrerer Sensorinformationen, wobei jede der Sensorinformationen zumindest einen durch einen jeweiligen Nutzfahrzeugsensor (25, 26, 27) deines Nutzfahrzeugs erfassten jeweiligen Parameter repräsentiert;
- Auswerten (303) der Sensorinformationen, um zu bestimmen, ob die durch die Sensorinformationen repräsentierten Parameter für ein Beladungsereignis und/oder ein Entladungsereignis in einem Laderaum (20) des Nutzfahrzeugs charakteristisch sind;
- wenn durch das Auswerten der Sensorinformationen bestimmt wird, dass die durch die Sensorinformationen repräsentierten Parameter für ein Beladungsereignis und/oder ein Entladungsereignis im Laderaum des Nutzfahrzeugs charakteristisch sind, Ansteuern (304) eines Bildsensors (29) derart, dass der Bildsensor ein Bild erfasst, das zumindest einen Teil der Beladung des Laderaums des Nutzfahrzeugs darstellt;
- Empfangen (305) einer Bildinformation, wobei die Bildinformation das durch den Bildsensor erfasste Bild repräsentiert;
wobei in den zumindest zwei Durchgängen zumindest zwei unterschiedliche Bildinformationen empfangen werden, und wobei die zumindest zwei unterschiedlichen Bildinformationen zwei unterschiedliche Bilder repräsentieren, die eine unterschiedliche Beladung des Laderaums darstellen.

## Beschreibung

### Gebiet

Beispielhafte Ausführungsformen der Erfindung betreffen Lösungen zum Überwachen eines Beladungsvorgangs und/oder eines Entladungsvorgangs eines Laderaums eines Nutzfahrzeugs.

### Hintergrund

Es besteht das Bedürfnis, eine Lösung zur Überwachung eines Beladungsvorgangs eines Laderaums eines Nutzfahrzeugs bereitzustellen. Eine Möglichkeit hierfür ist die Bereitstellung einer Videoüberwachungslösung. Allerdings lassen sich solche Videoüberwachungslösungen aufgrund der begrenzten Datenrate nicht an die in den meisten Nutfahrzeugen verwendeten Bussysteme anbinden, sondern werden über eine separate Kommunikationsverbindung angesprochen.

### Zusammenfassung einiger beispielhafter Ausführungsformen der Erfindung

Eine Aufgabe der Erfindung ist es die oben genannten Nachteile zu überwinden.

Gemäß einem ersten Aspekt der Erfindung wird ein Verfahren offenbart, wobei das Verfahren zumindest zwei Durchgänge der folgenden Schritte umfasst:
- Empfangen einer oder mehrerer Sensorinformationen, wobei jede der Sensorinformationen zumindest einen durch einen jeweiligen Nutzfahrzeugsensor eines Nutzfahrzeugs erfassten jeweiligen Parameter repräsentiert;
- Auswerten der Sensorinformationen, um zu bestimmen, ob die durch die Sensorinformationen repräsentierten Parameter für ein Beladungsereignis und/oder ein Entladungsereignis in einem Laderaum des Nutzfahrzeugs charakteristisch sind;
- wenn durch das Auswerten der Sensorinformationen bestimmt wird, dass die durch die Sensorinformationen repräsentierten Parameter für ein Beladungsereignis und/oder ein Entladungsereignis im Laderaum des Nutzfahrzeugs charakteristisch sind, Ansteuern eines Bildsensors derart, dass der Bildsensor ein Bild erfasst, das zumindest einen Teil der Beladung des Laderaums des Nutzfahrzeugs darstellt;
- Empfangen einer Bildinformation, wobei die Bildinformation das durch den Bildsensor erfasste Bild repräsentiert;
wobei in den zumindest zwei Durchgängen zumindest zwei unterschiedliche Bildinformationen empfangen werden, und wobei die zumindest zwei unterschiedlichen Bildinformationen zwei unterschiedliche Bilder repräsentieren, die eine unterschiedliche Beladung des Laderaums darstellen.

Das offenbarte Verfahren gemäß dem ersten Aspekt wird beispielsweise durch eine Vorrichtung (z.B. die unten offenbarte Vorrichtung gemäß dem ersten Aspekt) oder mehrere miteinander kooperierende Vorrichtungen ausgeführt.

Gemäß dem ersten Aspekt der Erfindung wird ferner eine Vorrichtung oder mehrere miteinander kooperierende Vorrichtungen offenbart, wobei die Vorrichtung(en) Mittel eingerichtet zur Ausführung des offenbarten Verfahrens gemäß dem ersten Aspekt umfasst/en.

Es wird somit eine Vorrichtung umfassend Mittel eingerichtet zur Ausführung des offenbarten Verfahrens gemäß dem ersten Aspekt offenbart. Dabei können verschiedene Schritte des offenbarten Verfahrens gemäß dem ersten Aspekt durch das gleiche Mittel der Vorrichtung oder durch verschiedene Mittel der Vorrichtung ausgeführt werden. Zum Beispiel ist die offenbarte Vorrichtung eine Steuervorrichtung und/oder eine Telematikvorrichtung eines Nutzfahrzeugs und/oder für ein Nutzfahrzeug.

Außerdem werden somit mehrere miteinander kooperierende Vorrichtungen umfassend Mittel eingerichtet zur Ausführung des offenbarten Verfahrens gemäß dem ersten Aspekt offenbart. Dabei können verschiedene Schritte des offenbarten Verfahrens gemäß dem ersten Aspekt durch das gleiche Mittel der gleichen Vorrichtung(en) oder durch verschiedene Mittel der gleichen Vorrichtung(en) oder durch verschiedene Mittel verschiedener Vorrichtungen ausgeführt werden. Zum Beispiel sind die offenbarten mehreren miteinander kooperierenden Vorrichtungen Teil eines Steuerungssystems eines Nutzfahrzeugs und/oder für ein Nutzfahrzeug. Es versteht sich, dass die Erfindung nicht auf diese Beispiele beschränkt ist.

Die Mittel der Vorrichtung(en) können Hardware- und/oder Software-Komponenten umfassen. Die Mittel können beispielsweise mindestens einen Speicher mit Programmanweisungen eines Computerprogramms (z.B. des unten offenbarten Computerprogramms gemäß dem ersten Aspekt) und mindestens einen Prozessor eingerichtet zum Ausführen von Programmanweisungen aus dem mindestens einen Speicher umfassen. Dementsprechend soll gemäß dem ersten Aspekt auch zumindest eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren gemäß dem ersten Aspekt oder einen oder mehrere Schritte des offenbarten Verfahrens gemäß dem ersten Aspekt auszuführen.

Alternativ oder zusätzlich können die Mittel ferner eine oder mehrere Kommunikationsschnittstellen (z.B. einen oder mehrere drahtlose und/oder drahtgebundene Netzwerkschnittstellen wie einen oder mehrere Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte(n) Vorrichtung(en) auch andere nicht aufgeführte Mittel umfassen kann.

Gemäß dem ersten Aspekt der Erfindung wird ferner ein Nutzfahrzeug und/oder ein Nutzfahrzeugaufbau offenbart, wobei das Nutzfahrzeug und/oder der Nutzfahrzeugaufbau umfasst:
- einen Laderaum;
- einen oder mehrere Nutzfahrzeugsensoren;
- einen Bildsensor;
- eine Vorrichtung umfassend Mittel eingerichtet zur Ausführung des offenbarten Verfahrens gemäß dem ersten Aspekt oder mehrere miteinander kooperierende Vorrichtungen umfassend Mittel eingerichtet zur Ausführung des offenbarten Verfahrens gemäß dem ersten Aspekt.

Gemäß dem ersten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die offenbarte Vorrichtung gemäß dem ersten Aspekt) zu veranlassen, das offenbarte Verfahren gemäß dem ersten Aspekt auszuführen.

Das offenbarte Computerprogramm gemäß dem ersten Aspekt ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Eigenschaften des offenbarten Verfahrens, der offenbarten Vorrichtung(en), des offenbarten Nutzfahrzeugs, des offenbarten Nutzfahrzeugsaufbaus und des offenbarten Computerprogramms gemäß dem ersten Aspekt - teilweise beispielhaft - beschrieben.

Das offenbarte Verfahren, die offenbarte(n) Vorrichtung(en), das offenbarte Nutzfahrzeug, der offenbarte Nutzfahrzeugsaufbau und das offenbarte Computerprogramm dienen beispielsweise zum Überwachen eines Beladungsvorgangs und/oder eines Entladungsvorgangs eines Laderaums eines Nutzfahrzeugs.

Ein Beladungsvorgang umfasst beispielsweise mehrere Beladungsereignisse; und ein Entladungsvorgang umfasst beispielsweise mehrere Entladungsereignisse. Dabei soll unter einem Beladungsereignis beispielsweise das Beladen des Laderaums mit einem einzelnen Ladegut verstanden werden; und unter einem Entladungsereignis soll beispielsweise das Ausladen eines einzelnen Ladeguts aus dem Laderaum verstanden werden. Ein Ladegut ist beispielsweise ein Stückgut wie ein (gefülltes) Gebinde, eine (beladene) Palette, eine Materialrolle oder ein (gefülltes) Fass.

Ein Nutzfahrzeug ist zum Beispiel ein Lastkraftwagen, ein Anhänger, ein Sattelauflieger oder ein Zuggespann (z.B. umfassend einen Lastkraftwagen und einen Anhänger oder einen Sattelauflieger). Nutzfahrzeuge sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Nutzfahrzeugaufbauten auf, welche der Aufnahme der zu transportierenden Güter in einem Laderaum dienen. So sind beispielsweise Kofferaufbauten mit festen Seitenwänden, einer festen Stirnwand, einer durch Flügeltüren gebildeten Rückwand und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern. Dementsprechend soll unter einem Nutzfahrzeugaufbau beispielsweise ein Kofferaufbau, ein Planenaufbau und/oder ein Curtainsider verstanden werden.

Dass das offenbarte Verfahren zumindest zwei Durchgänge der genannten Schritte umfasst, kann beispielsweise derart verstanden werden, dass die Abfolge dieser Schritte im Rahmen des Verfahrens zumindest zweimal in Form einer Schleife wiederholt wird. Es versteht sich, dass das offenbarte Verfahren auch mehr als zwei Durchgänge der genannten Schritte umfassen kann, so dass die Abfolge dieser Schritte im Rahmen des offenbarten Verfahrens auch mehr als zweimal wiederholt werden kann. Der erste der zumindest zwei Durchgänge startet beispielsweise, wenn eine vorgegebene Startbedingung (z.B. das Öffnen einer Tür des Laderaums) erfüllt ist; und der letzte der zumindest zwei Durchgänge kann beispielsweise beendet werden, wenn eine vorgegebene Abbruchbedingung (z.B. das Schließen der Tür des Laderaums) erfüllt ist Selbstverständlich kann es vorkommen, dass die Abbruchbedingung bereits im ersten Durchgang erfüllt wird, so dass es keine zumindest zwei Durchgänge der genannten Schritte gibt. Dass das offenbarte Verfahren zumindest zwei Durchgänge der genannten Schritte umfasst, kann somit auch derart verstanden werden, dass beim Ausführen des offenbarten Verfahrens gemäß dem ersten Aspekt eine solche Abbruchbedingung erst dann erfüllt ist, wenn zumindest zwei Durchgänge der genannten Schritte erfolgt sind.

In jedem der Durchgänge werden jeweilige Sensorinformationen empfangen und ausgewertet.

Jede der im jeweiligen Durchgang empfangenen Sensorinformationen repräsentiert zumindest einen durch einen jeweiligen Nutzfahrzeugsensor des Nutzfahrzeugs erfassten jeweiligen Parameter. Zum Beispiel wird jede der Sensorinformationen von dem jeweiligen Nutzfahrzeugsensor und/oder über eine jeweilige Kommunikationsverbindung empfangen.

Die im jeweiligen Durchgang empfangenen Sensorinformationen werden ausgewertet, um zu bestimmen, ob die durch die Sensorinformationen repräsentierten Parameter für ein Beladungsereignis und/oder ein Entladungsereignis in einem Laderaum des Nutzfahrzeugs charakteristisch sind. Das Auswerten erfolgt beispielsweise gemäß einem vorgegebenen Auswertungsalgorithmus. Zum Beispiel kann der Auswertungsalgorithmus basierend auf festen Regeln (z.B. in Form von Parameterschwellwerten) auswerten, ob die durch die Sensorinformationen repräsentierten Parameter für ein Beladungsereignis und/oder ein Entladungsereignis in einem Laderaum des Nutzfahrzeugs charakteristisch sind. Alternativ kann es sich bei dem Auswertungsalgorithmus beispielsweise um einen Mustererkennungsalgorithmus handeln, der versucht in den durch die Sensorinformationen repräsentierten Parametern ein Muster, das für ein Beladungsereignis und/oder ein Entladungsereignis im Laderaum des Nutzfahrzeugs charakteristisch ist, zu erkennen. Ein oder mehrere solcher Muster können beispielsweise vorgegeben sein und/oder durch experimentell durchgeführte Beladungsereignisse und/oder Entladungsereignisse erhalten werden.

Wenn durch das Auswerten der Sensorinformationen bestimmt wird, dass die durch die in dem jeweiligen Durchgang empfangenen Sensorinformationen repräsentierten Parameter für ein Beladungsereignis und/oder ein Entladungsereignis im Laderaum des Nutzfahrzeugs charakteristisch sind, wird in dem jeweiligen Durchgang der Bildsensor derart angesteuert, dass der Bildsensor ein Bild erfasst, das zumindest einen Teil der Beladung des Laderaums des Nutzfahrzeugs darstellt. Anschließend wird in dem jeweiligen Durchgang eine Bildinformation, die das durch den Bildsensor in dem jeweiligen Durchgang erfasste Bild repräsentiert, empfangen.

Unter einem durch den Bildsensor erfassten Bild soll beispielsweise ein Einzelbild und/oder ein Standbild, jedoch keine Sequenz von Bildern verstanden werden.

Der Bildsensor ist beispielsweise Teil einer Bildsensoranordnung zum Überwachen des Laderaums oder eines Teils des Laderaums. Ein Beispiel für den Bildsensor ist eine im Laderaum angeordneten Überwachungskamera.

In den zumindest zwei Durchgängen sollen zumindest zwei unterschiedliche Bildinformationen empfangen werden, die zwei unterschiedliche Bilder mit einer unterschiedlichen Beladung des Laderaums darstellen.

Wenn durch das Auswerten der Sensorinformationen bestimmt wird, dass die durch die in dem jeweiligen Durchgang empfangenen Sensorinformationen repräsentierten Parameter für ein Beladungsereignis und/oder ein Entladungsereignis im Laderaum des Nutzfahrzeugs charakteristisch sind, deutet dies zumindest mit einer hohen Wahrscheinlichkeit daraufhin, dass ein Beladungsereignis und/oder ein Entladungsereignis stattgefunden hat, durch das sich die Beladung des Laderaums geändert hat. In jedem der zumindest zwei Durchgänge wird somit erst dann ein Bild des Laderaums erfasst, wenn die in dem jeweiligen Durchgang empfangenen Sensorinformationen repräsentierten Parameter darauf hindeuten, dass ein Beladungsereignis und/oder ein Entladungsereignis stattgefunden hat. Die Bilder werden somit derart erfasst, dass sie die Beladung des Laderaums nach dem jeweiligen Beladungsereignis und/oder ein Entladungsereignis darstellen. Mit anderen Worten stellen sie das Ergebnis des jeweiligen Beladungsereignisses und/oder Entladungsereignisses dar, so dass das Ergebnis des jeweiligen Beladungsereignisses und/oder Entladungsereignisses anhand des jeweiligen Bilds geprüft und der jeweilige Beladungsvorgang und/oder Entladungsvorgang anhand der Bilder überwacht werden kann. Zum Beispiel kann anhand eines solchen Bildes geprüft werden, ob ein im Rahmen eines Beladungsereignisses im Laderaum abgeladenes Ladegut ordnungsgemäß platziert und gesichert wurde oder ob ein im Rahmen eines Entladungsereignisses aus dem Laderaum entladenes Ladegut ordnungsgemäß entfernt und die verbliebenen Ladegüter ordnungsgemäß gesichert wurden.

Das offenbarte Verfahren gemäß dem ersten Aspekt stellt somit eine Lösung zur Bildüberwachung eines Beladungsvorgangs und/oder eines Entladungsvorgangs im Laderaum des Nutzfahrzeugs bereit, bei der nur dann ein Bild erfasst wird, wenn die empfangenen Sensorinformationen darauf hindeuten, dass ein Beladungsereignis und/oder ein Entladungsereignis stattgefunden hat. Jedes Bild ist daher relevant für die Beurteilung durch den Benutzer. Die Erfassung redundanter Bilder wird vermieden. Gegenüber Überwachungslösungen, die auf einer kontinuierlichen oder periodischen Bilderfassung oder einer Videoüberwachung basieren, kann somit eine deutlich Reduzierung der für die Überwachung notwendigen Datenmenge erreicht werden, so dass das offenbarte Verfahren insbesondere auch für den Einsatz in Nutzfahrzeugen geeignet ist, deren Bussysteme nur geringe Datenraten unterstützen.

In beispielhaften Ausführungsformen gemäß dem ersten Aspekt umfasst zumindest eine (z.B. jede) der Bildinformationen und/oder zumindest eine (z.B. jede) der Sensorinformationen eine oder mehrere Metainformationen. Solche Metainformationen beschreiben beispielsweise den jeweiligen Sensor, der das durch die jeweilige Bildinformation repräsentierte Bild oder den durch die jeweilige Sensorinformation repräsentierten Parameter erfasst hat. Zum Beispiel umfassen solche Metainformationen eine oder mehrere der folgenden Informationen:
- Typ oder Kennung des jeweiligen Sensors;
- Konfiguration des jeweiligen Sensors, mit der er das jeweilige Bild oder den jeweiligen Parameter erfasst hat;
- Zeitpunkt (z.B. Tageszeit und/oder Datum, z.B. in Form der Unixzeit), zu dem der jeweilige Sensor das jeweilige Bild oder den jeweiligen Parameter erfasst hat;
- Position des Nutzfahrzeugs, an der der jeweilige Sensor das jeweilige Bild oder den jeweiligen Parameter erfasst hat.

In beispielhaften Ausführungsformen gemäß dem ersten Aspekt umfasst das offenbarte Verfahren ferner:
- Bereitstellen einer Bildsequenzinformation zumindest teilweise basierend auf den in den zumindest zwei Durchgängen empfangenen zumindest zwei unterschiedlichen Bildinformationen, wobei die Bildsequenzinformation eine Sequenz der durch die zumindest zwei unterschiedlichen Bildinformationen repräsentierten Bilder repräsentiert.

Die durch die Bildsequenzinformation repräsentierte Sequenz der Bilder umfasst die Bilder beispielsweise in der zeitlichen Abfolge, in der sie erfasst wurden. Zum Beispiel kann die zeitliche Abfolge durch jeweilige Metainformationen, die den Zeitpunkt angeben, zu dem das jeweilige Bild erfasst wurde, bestimmt werden.

Es versteht sich, dass die durch die Bildsequenzinformation repräsentierte Sequenz mehr als zwei Bilder enthalten kann. Zum Beispiel kann die durch die Bildsequenzinformation repräsentierte Sequenz für jeden der Durchgänge zumindest ein jeweiliges Bild enthalten. Anhand einer solchen Bildsequenz der im Rahmen eines Beladungsvorgangs erfassten Bilder, lässt sich der Beladungsvorgang somit als Sequenz von Einzelbilder ähnlich wie bei einem "Daumenkino" nachvollziehen und überwachen.

In beispielhaften Ausführungsformen gemäß dem ersten Aspekt umfasst das Verfahren ferner:
- Bereitstellen einer Be- und/oder Entladevorgangsprotokollinformation zumindest teilweise basierend auf den in den zumindest zwei Durchgängen empfangenen Sensorinformationen, wobei die Be- und/oder Entladevorgangsprotokollinformation zumindest die Sensorinformationen umfasst, für die bestimmt wurde, dass sie charakteristisch für ein Beladungsereignis und/oder ein Entladungsereignis sind.

Zum Beispiel umfasst die Be- und/oder Entladevorgangsprotokollinformation eine oder mehrere Sensorinformationen der in den zumindest zwei Durchgängen empfangenen Sensorinformationen. Zum Beispiel kann die Be- und/oder Entladevorgangsprotokollinformation eine oder mehrere vorgegebene Sensorinformationen der in den zumindest zwei Durchgängen empfangenen Sensorinformationen umfassen. Zum Beispiel umfasst die Be- und/oder Entladevorgangsprotokollinformation für jeden der Durchgänge eine oder mehrere vorgegebene Sensorinformationen der Sensorinformationen der in den zumindest zwei Durchgängen empfangenen Sensorinformationen. Dadurch können weitere Sensorinformationen zu einem Beladungsvorgang, wie beispielsweise Sensorinformationen, die eine Auswertung einer Ladegewichtsveränderung (z.B. basierend auf Gewichtssensorinformationen) und/oder eine Bestimmung der Dauer des Ladevorgangs und/oder eine Bestimmung des Ladevolumen (z.B. basierend auf Bildinformationen) und/oder eine Bestimmung der Temperatur des Ladeguts (z.B. basierend auf Wärmebildinfonnationen) und/oder eine Bestimmung der Anzahl der Be- und/oder Entladungsereignisses und/oder eine Zuordnung des Ladeguts zu einem Stellplatz ermöglichen, bereitgestellt werden.

Außerdem kann die Be- und/oder Entladevorgangsprotokollinformation die Bildsequenzinformation umfassen.

In beispielhaften Ausführungsformen gemäß dem ersten Aspekt umfasst:
(a) das Beladungsereignis die folgenden Schritte:
   - Einfahren eines mit einem ersten Ladegut beladenen Flurförderzeugs in den Laderaum des Nutzfahrzeugs;
   - Abladen des ersten Ladeguts in den Laderaum des Nutzfahrzeugs;
   - Ausfahren des unbeladenen Flurförderzeugs aus dem Laderaum des Nutzfahrzeugs;
   und/oder
(b) das Entladungsereignis die folgenden Schritte:
   - Einfahren eines unbeladenen Flurförderzeugs in den Laderaum des Nutzfahrzeugs;
   - Beladen des Flurförderzeugs mit einem in dem Laderaum des Nutzfahrzeuges befindlichen zweiten Ladeguts;
   - Ausfahren des mit dem zweiten Ladegut beladenen Flurförderzeugs aus dem Laderaum des Nutzfahrzeugs.

Bei diesen Schritten handelt es sich um typische Schritte eines Beladungsereignisses, bei dem der Laderaum mit einem einzelnen Ladegut beladen wird, und/oder eines Entladungsereignisses, bei dem ein einzelnes Ladegut aus dem Laderaum ausgeladen wird. Es versteht sich, dass die Erfindung nicht auf Beladungsereignisse und/oder Entladungsereignisse mit diesen Schritten beschränkt ist. Unter einem Flurförderzeug soll beispielsweise ein Gabelstapler und/oder ein Hubwagen verstanden werden.

Zum Beispiel sind die durch die Sensorinformationen repräsentierten Parameter charakteristisch für einen oder mehrere der Schritte des Beladungsereignisses und/oder des Entladungsereignisses.

Wie oben offenbart, kann das Auswerten der Sensorinformationen gemäß einem vorgegebenen Auswertungsalgorithmus erfolgen. Zum Beispiel bestimmt der Auswertungsalgorithmus, dass die durch die ausgewerteten Sensorinformationen repräsentierten Parameter charakteristisch für ein Beladungsereignis und/oder ein Entladungsereignis sind, wenn die Parameter charakteristisch zumindest für einen Teil (z.B. einen, zwei oder mehrere vorgegebene Schritte) der Schritte des Beladungsereignisses und/oder des Entladungsereignisses sind.

Zum Beispiel bestimmt der Auswertungsalgorithmus, dass die durch die ausgewerteten Sensorinformationen repräsentierten Parameter charakteristisch:
(a) für ein Beladungsereignis sind, wenn die durch die ausgewerteten Sensorinformationen repräsentierten Parameter charakteristisch für folgende Schritte sind:
   - Einfahren eines mit einem ersten Ladegut beladenen Flurförderzeugs in den Laderaum des Nutzfahrzeugs;
   - Ausfahren des unbeladenen Flurförderzeugs aus dem Laderaum des Nutzfahrzeugs;
   und/oder
(b) für ein Entladungsereignis sind, wenn die durch die ausgewerteten Sensorinformationen repräsentierten Parameter charakteristisch für folgende Schritte sind:
   - Einfahren eines unbeladenen Flurförderzeugs in den Laderaum des Nutzfahrzeugs;
   - Ausfahren des mit dem zweiten Ladegut beladenen Flurförderzeugs aus dem Laderaum des Nutzfahrzeugs.

Zu diesem Zweck kann der Auswertungsalgorithmus beispielsweise Sensorinformationen eines Betreten- und/oder Verlassenssensor und eines Gewichtssensors gemeinsam auswerten. Zum Beispiel kann ein Betreten- und/oder Verlassenssensor erfassen, ob ein Objekt (z.B. ein Flurförderzeug) den Laderaum des Nutzfahrzeugs betritt oder verlässt. Ferner kann ein Gewichtssensor das Gewicht des Objekts beim (durch den Betreten- und/oder Verlassenssensor erfassten) Betreten und beim (durch den Betreten- und/oder Verlassenssensor erfassten) Verlassen erfassen, so dass beispielsweise durch Überschreiten eines Schwellwerts bestimmt werden kann, dass es sich bei dem Objekt um ein Flurförderzeug (und beispielsweise nicht nur um eine Person) handelt, und durch einen Gewichtsvergleich bestimmt werden kann, ob das Flurförderzeug beim Einfahren beladen oder unbeladen sowie beim Ausfahren unbeladen oder beladen war.

Alternativ oder zusätzlich kann der Auswertungsalgorithmus beispielsweise bestimmen, dass die durch die ausgewerteten Sensorinformationen repräsentierten Parameter charakteristisch:
(a) für ein Beladungsereignis sind, wenn die durch die ausgewerteten Sensorinformationen repräsentierten Parameter charakteristisch für folgende Schritte sind:
   - Abladen des ersten Ladeguts in den Laderaum des Nutzfahrzeugs; und/oder
(b) für ein Entladungsereignis sind, wenn die durch die ausgewerteten Sensorinformationen repräsentierten Parameter charakteristisch für folgende Schritte sind:
   - Beladen des Flurförderzeugs mit einem in dem Laderaum des Nutzfahrzeuges befindlichen zweiten Ladeguts;

Zu diesem Zweck kann der Auswertungsalgorithmus beispielsweise Bildinformationen eines Bildsensors auswerten.

Es versteht sich, dass der Auswertungsalgorithmus nicht auf diese Beispiele begrenzt ist. Insbesondere kann der Auswertungsalgorithmus auch andere oder zusätzliche Sensorinformationen auswerten, um zu bestimmen, ob die die durch die ausgewerteten Sensorinformationen repräsentierten Parameter charakteristisch für ein Beladungsereignis und/oder ein Entladungsereignis sind.

In beispielhaften Ausführungsformen gemäß dem ersten Aspekt werden in jedem Durchgang zumindest zwei oder drei verschiedene Sensorinformationen empfangen und ausgewertet. Zum Beispiel repräsentieren die verschiedenen Sensorinformationen von verschiedenen Nutzfahrzeugsensoren erfasste Parameter.

Es kann beispielsweise vorgesehen sein, dass durch das Auswerten der Sensorinformationen nur dann bestimmt wird, dass die durch die Sensorinformationen repräsentierten Parameter für ein Beladungsereignis und/oder ein Entladungsereignis im Laderaum des Nutzfahrzeugs charakteristisch sind, wenn hierfür zumindest zwei oder drei verschiedene Sensorinformationen gemeinsam ausgewertet werden. Dabei soll unter dem gemeinsamen Auswerten von verschiedenen Sensorinformationen verstanden werden, dass alle der durch die verschiedenen Sensorinformationen repräsentierten Parameter beim Bestimmen, ob die durch die Sensorinformationen repräsentierten Parameter für ein Beladungsereignis und/oder ein Entladungsereignis im Laderaum des Nutzfahrzeugs charakteristisch sind, berücksichtigt werden. Es reicht somit nicht aus, wenn nur ein Teil der durch die verschiedenen Sensorinformationen repräsentierten Parameter charakteristisch für ein Beladungsereignis und/oder ein Entladungsereignis ist. Ein Beispiel für ein solches gemeinsames Auswerten von verschiedenen Sensorinformationen ist das oben offenbarte Beispiel, bei dem Sensorinformationen eines Betreten- und/oder Verlassenssensor und eines Gewichtssensors gemeinsam ausgewertet werden.

In beispielhaften Ausführungsformen gemäß dem ersten Aspekt werden die durch die Sensorinformationen repräsentierten Parameter zumindest teilweise durch zumindest einen der folgenden Nutzfahrzeugsensoren erfasst werden:
- Türöffnungssensor, beispielsweise umfassend einen Türkontaktschalter;
- Bewegungssensor, beispielsweise in Form eines Bewegungsmelders, z.B. eines Ultraschall-Bewegungsmelders oder eines Infrarot-Bewegungsmelders;
- Balgdrucksensor;
- Achslastsensor;
- Fahrhöhensensor;
- Positionssensor, beispielsweise in Form eines Sensors eine Globalen Satelliten Navigationssystems (z.B. GPS oder Galileo)
- Bildsensor, beispielsweise in Form eine Überwachungskamera und/oder eines Kamerabewegungssensors und/oder eines Wärmebildsensors wie einer Wärmebildkamera;
- Gewichtssensor, beispielsweise umfassend eine Wägezelle;
- Betreten- und/oder Verlassenssensor, beispielsweise umfassend eine Lichtschranke, eine Induktionsschleife und/oder eine Druckplatte.

Jeder Parameter, der durch einen dieser Nutzfahrzeugsensoren erfasst wird, kann beim Bestimmen, ob die durch die ausgewerteten Sensorinformationen repräsentierten Parameter charakteristisch für ein Beladungsereignis und/oder ein Entladungsereignis sind, nützlich sein.

Ein Türöffhungssensor kann beispielsweise erfassen, ob eine Tür des Laderaums geöffnet oder geschlossen ist. Zum Beispiel kann vorgesehen sein, dass nur dann bestimmt wird, dass die durch die ausgewerteten Sensorinformationen repräsentierten Parameter charakteristisch für ein Beladungsereignis und/oder ein Entladungsereignis sind, wenn eine der ausgewerteten Sensorinformationen einen Parameter repräsentiert, der angibt, dass der Türöffnungssensor erfasst hat, dass die Tür des Laderaums geöffnet war.

Ein Bewegungssensor kann beispielsweise Bewegung im Laderaum des Nutzfahrzeugs erfassen. Zum Beispiel kann vorgesehen sein, dass nur dann bestimmt wird, dass die durch die ausgewerteten Sensorinformationen repräsentierten Parameter charakteristisch für ein Beladungsereignis und/oder ein Entladungsereignis sind, wenn eine der ausgewerteten Sensorinformationen einen Parameter repräsentiert, der angibt, dass der Bewegungssensor Bewegungen im Laderaum des Nutzfahrzeugs erfasst hat.

Eine Gewichtsveränderung der Ladung geht beispielsweise mit einer Veränderung eines Balgdrucks des Nutzfahrzeugs und einer Achslast des Nutzfahrzeugs und einer Fahrhöhe des Nutzfahrzeugs einher, so dass durch eine durch einen Balgdrucksensor erfasste Veränderung des Balgdrucks oder durch einen Achslastsensor erfasste Veränderung der Achslast oder durch einen Fahrhöhensensor erfasste Veränderung der Fahrhöhe charakteristisch für eine Gewichtsveränderung durch ein Beladungsereignis und/oder ein Entladungsereignis sein kann. Dabei geht ein Beladungsereignis mit einer Gewichtserhöhung (d.h. einer Erhöhung des Balgdrucks und der Achslast sowie einer Verringerung der Fahrhöhe) und ein Entladungsereignis mit einer Gewichtsverringerung (d.h. einer Verringerung des Balgdrucks und der Achslast sowie einer Erhöhung der Fahrhöhe) einher. Dementsprechend kann beispielsweise vorgesehen sein, dass nur dann bestimmt wird, dass die durch die ausgewerteten Sensorinformationen repräsentierten Parameter charakteristisch für ein Beladungsereignis und/oder ein Entladungsereignis sind, wenn eine der ausgewerteten Sensorinformationen einen entsprechenden durch einen Balgdrucksensor und/oder einen Fahrhöhensensor erfasst Parameter repräsentiert.

Zum Beispiel kann davon ausgegangen werden, dass ein Beladungsereignis und/oder ein Entladungsereignis nur an einem dafür vorgesehenen Ort (z.B. auf einem Speditions- oder Logistikgelände) stattfindet. Dementsprechend kann vorgesehen sein, dass nur dann bestimmt wird, dass die durch die ausgewerteten Sensorinformationen repräsentierten Parameter charakteristisch für ein Beladungsereignis und/oder ein Entladungsereignis sind, wenn eine der ausgewerteten Sensorinformationen einen Parameter repräsentiert, der angibt, dass der Positionssensor erfasst hat, dass sich das Nutzfahrzeug an einem Ort für ein Beladungsereignis und/oder ein Entladungsereignis befunden hat. Zum Beispiel können solche Orte in Form von geographischen Positionen oder geographischen Bereichen vorgegeben sein.

Für einen Bildsensor sowie einen Betreten- und/oder Verlassenssensor und einen Gewichtssensor haben wir oben bereits offenbart, dass diese für ein Beladungsereignis und/oder ein Entladungsereignis charakteristisch sein können.

Zum Beispiel kann vorgesehen sein, dass in jedem Durchgang verschiedenen Sensorinformationen von zumindest zwei oder drei dieser Nutzfahrzeugsensoren gemeinsam ausgewertet werden, um zu bestimmen, ob die durch die Sensorinformationen repräsentierten Parameter für ein Beladungsereignis und/oder ein Entladungsereignis im Laderaum des Nutzfahrzeugs charakteristisch sind.

In beispielhaften Ausführungsformen gemäß dem ersten Aspekt werden die Sensorinformationen und/oder die Bildinformation in den zumindest zwei Durchgängen über eine Kommunikationsverbindung eines Bussystems des Nutzfahrzeugs empfangen werden.

Zum Beispiel unterstützt das Bussystem eine Datenübertragungsrate von nicht mehr als 10Mbit/s oder 1,5 Mbit/s oder 1 Mbit/s oder 500 kbit/s oder 150 kbit/s oder 125 kbit/s.

Das Bussystem ist beispielsweise ein CAN-, K-Leitungs-, LIN- oder Flexray-Bussystem. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

In beispielhaften Ausführungsformen gemäß dem ersten Aspekt startet der erste der zumindest zwei Durchgänge, wenn bestimmt wird, dass eine vorgegebene Startbedingung erfüllt ist und/oder endet der letzte der zumindest zwei Durchgänge, wenn bestimmt wird, dass eine vorgegebene Abbruchbedingung erfüllt ist. Zum Beispiel wird bestimmt, dass die vorgegebene Startbedingung erfüllt ist, wenn eine Sensorinformation empfangen wird, die einen Parameter repräsentiert, der angibt, dass ein Türöffnungssensor erfasst hat, dass eine Tür des Laderaums geöffnet wurde. Dass die vorgegebene Abbruchbedingung erfüllt ist, wird beispielsweise bestimmt, wenn eine Sensorinformation empfangen wird, die einen Parameter repräsentiert, der angibt, dass ein Türöffnungssensor erfasst hat, dass eine Tür des Laderaums geschlossen wurde.

Ferner kann vorgesehen sein, dass, wenn bestimmt wird, dass die Startbedingung und/oder die Abbruchbedingung erfüllt ist, der Bildsensor derart angesteuert wird, dass der Bildsensor ein jeweiliges Bild erfasst, das zumindest einen Teil der Beladung des Laderaums des Nutzfahrzeugs darstellt, und eine Bildinformation empfangen wird, wobei die Bildinformation das durch den Bildsensor erfasste jeweilige Bild repräsentiert.

In beispielhaften Ausführungsformen gemäß dem ersten Aspekt wird das Verfahren durch eine Vorrichtung oder durch mehrere miteinander kooperierende Vorrichtungen ausgeführt.

In beispielhaften Ausführungsformen gemäß dem ersten Aspekt ist das Nutzfahrzeug ein Lastkraftwagen, ein Anhänger, ein Sattelauflieger oder ein Zuggespann.

Gemäß einem zweiten Aspekt der Erfindung wird ein Verfahren offenbart, wobei das Verfahren zumindest zwei Durchgänge der folgenden Schritte umfasst:
- Empfangen einer oder mehrerer Sensorinformationen, wobei jede der Sensorinformationen zumindest einen durch einen jeweiligen Nutzfahrzeugsensor des Nutzfahrzeugs erfassten jeweiligen Parameter repräsentiert;
- Auswerten der Sensorinformationen, um zu bestimmen, ob die durch die Sensorinformationen repräsentierten Parameter für ein Beladungsereignis und/oder ein Entladungsereignis in einem Laderaum des Nutzfahrzeugs charakteristisch sind;
wobei das Verfahren ferner umfasst:
- Bereitstellen einer Ladeprotokollinformation zumindest teilweise basierend auf den in den zumindest zwei Durchgängen empfangenen Sensorinformationen, wobei die Be- und/oder Entladevorgangsprotokollinformation zumindest die Sensorinformationen umfassen, für die bestimmt wurde, dass sie charakteristisch für ein Beladungsereignis und/oder ein Entladungsereignis sind.

Das offenbarte Verfahren gemäß dem zweiten Aspekt wird beispielsweise durch eine Vorrichtung (z.B. die unten offenbarte Vorrichtung gemäß dem zweiten Aspekt) oder mehrere miteinander kooperierende Vorrichtungen ausgeführt.

Gemäß dem zweiten Aspekt der Erfindung wird ferner eine Vorrichtung oder mehrere miteinander kooperierende Vorrichtungen offenbart, wobei die Vorrichtung(en) Mittel eingerichtet zur Ausführung des offenbarten Verfahrens gemäß dem zweiten Aspekt umfasst/en.

Es wird somit eine Vorrichtung umfassend Mittel eingerichtet zur Ausführung des offenbarten Verfahrens gemäß dem zweiten Aspekt offenbart. Dabei können verschiedene Schritte des offenbarten Verfahrens gemäß dem zweiten Aspekt durch das gleiche Mittel der Vorrichtung oder durch verschiedene Mittel der Vorrichtung ausgeführt werden. Zum Beispiel ist die offenbarte Vorrichtung eine Steuervorrichtung und/oder eine Telematikvorrichtung eines Nutzfahrzeugs und/oder für ein Nutzfahrzeug.

Außerdem werden somit mehrere miteinander kooperierende Vorrichtungen umfassend Mittel eingerichtet zur Ausführung des offenbarten Verfahrens gemäß dem zweiten Aspekt offenbart. Dabei können verschiedene Schritte des offenbarten Verfahrens gemäß dem zweiten Aspekt durch das gleiche Mittel der gleichen Vorrichtung(en) oder durch verschiedene Mittel der gleichen Vorrichtung(en) oder durch verschiedene Mittel verschiedener Vorrichtungen ausgeführt werden. Zum Beispiel sind die offenbarten mehreren miteinander kooperierenden Vorrichtungen Teil eines Steuerungssystems eines Nutzfahrzeugs und/oder für ein Nutzfahrzeug. Es versteht sich, dass die Erfindung nicht auf diese Beispiele beschränkt ist.

Die Mittel der Vorrichtung(en) können Hardware- und/oder Software-Komponenten umfassen. Die Mittel können beispielsweise mindestens einen Speicher mit Programmanweisungen eines Computerprogramms (z.B. des unten offenbarten Computerprogramms gemäß dem zweiten Aspekt) und mindestens einen Prozessor eingerichtet zum Ausführen von Programmanweisungen aus dem mindestens einen Speicher umfassen. Dementsprechend soll gemäß dem zweiten Aspekt auch zumindest eine Vorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Vorrichtung zu veranlassen, das offenbarte Verfahren gemäß dem zweiten Aspekt oder einen oder mehrere Schritte des offenbarten Verfahrens gemäß dem zweiten Aspekt auszuführen.

Alternativ oder zusätzlich können die Mittel ferner eine oder mehrere Kommunikationsschnittstellen (z.B. einen oder mehrere drahtlose und/oder drahtgebundene Netzwerkschnittstellen wie einen oder mehrere Netzwerkadapter) und/oder eine oder mehrere Benutzerschnittstellen (z.B. eine Tastatur, eine Maus, einen Bildschirm, einen berührungsempfindlichen Bildschirm, einen Lautsprecher, ein Mikrofon, usw.) umfassen. Es versteht sich, dass die offenbarte(n) Vorrichtung(en) auch andere nicht aufgeführte Mittel umfassen kann.

Gemäß dem zweiten Aspekt der Erfindung wird ferner ein Nutzfahrzeug und/oder ein Nutzfahrzeugaufbau offenbart, wobei das Nutzfahrzeug und/oder der Nutzfahrzeugaufbau umfasst:
- einen Laderaum;
- einen oder mehrere Nutzfahrzeugsensoren;
- einen Bildsensor;
- eine Vorrichtung umfassend Mittel eingerichtet zur Ausführung des offenbarten Verfahrens gemäß dem zweiten Aspekt oder mehrere miteinander kooperierende Vorrichtungen umfassend Mittel eingerichtet zur Ausführung des offenbarten Verfahrens gemäß dem zweiten Aspekt.

Gemäß dem zweiten Aspekt der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die offenbarte Vorrichtung gemäß dem zweiten Aspekt) zu veranlassen, das offenbarte Verfahren gemäß dem zweiten Aspekt auszuführen.

Das offenbarte Computerprogramm gemäß dem zweiten Aspekt ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Das offenbarte Verfahren gemäß dem zweiten Aspekt unterscheidet sich von dem offenbarten Verfahren gemäß dem ersten Aspekt davon, dass kein Bildsensor angesteuert und keine Bildinformation empfangen wird. Stattdessen wird gemäß dem zweiten Verfahren eine Ladeprotokollinformation bereitgestellt, wie es nur im Rahmen einer beispielhaften Ausführungsform gemäß dem ersten Aspekt vorgesehen ist. Abgesehen von diesen Unterschieden soll die Offenbarung für den ersten Aspekt auch als Offenbarung für den zweiten Aspekt gelten. Dementsprechend wird für eine - teilweise beispielhafte - Beschreibung der Eigenschaften des offenbarten Verfahrens, der offenbarten Vorrichtung(en), des offenbarten Nutzfahrzeugs, des offenbarten Nutzfahrzeugsaufbaus und des offenbarten Computerprogramms gemäß dem zweiten Aspekt auf die entsprechende Beschreibung für den ersten Aspekt verwiesen.

Weitere vorteilhafte beispielhafte Ausführungsformen der Aspekte der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung verstanden werden.

Es zeigen:
- Fig. 1: eine schematische Darstellung einer beispielhaften Ausführungsform einer Vorrichtung gemäß der Aspekte der Erfindung
- Fig. 2: eine schematische Darstellung einer beispielhaften Ausführungsform eines Nutzfahrzeugs gemäß der Aspekte der Erfindung; und
- Fig. 3: ein Flussdiagramm einer beispielhaften Ausführungsform eines Verfahrens gemäß dem ersten Aspekt der Erfindung
- Fig. 4: einen Ablauf eines beispielhaften Beladungsvorgangs gemäß dem ersten Aspekt der Erfindung.

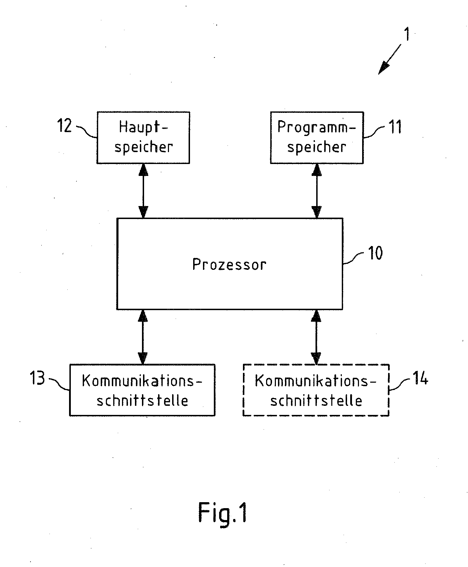

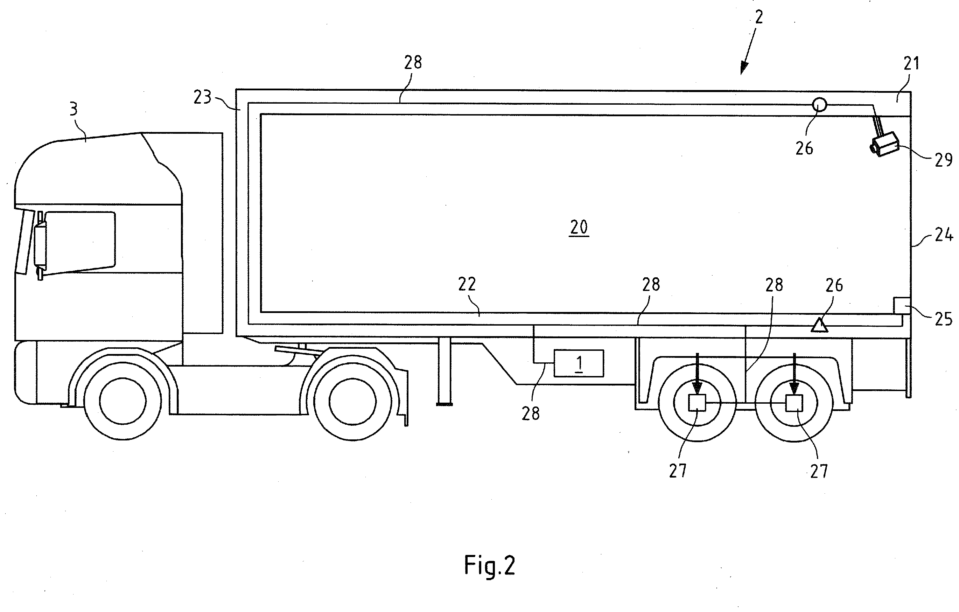

Fig. 1 ist eine schematische Darstellung einer beispielhaften Ausführungsform einer Vorrichtung 1 gemäß dem ersten Aspekt und/oder gemäß dem zweiten Aspekt. Die Vorrichtung 1 kann beispielsweise Teil eines Nutzfahrzeugs (z.B. des in Fig. 2 dargestellten Nutzfahrzeugs 2) sein.

Die Vorrichtung 1 umfasst beispielhaft einen Prozessor 10 und verbunden mit dem Prozessor 10 einen ersten Speicher als Programm- und Datenspeicher 11, einen zweiten Speicher als Hauptspeicher 12 sowie eine Kommunikationsschnittstelle 13. Ferner kann die Vorrichtung 1 optional eine zweite Kommunikationsschnittstelle 14 umfassen.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 1 auch mehrere Prozessoren 10 umfassen kann.

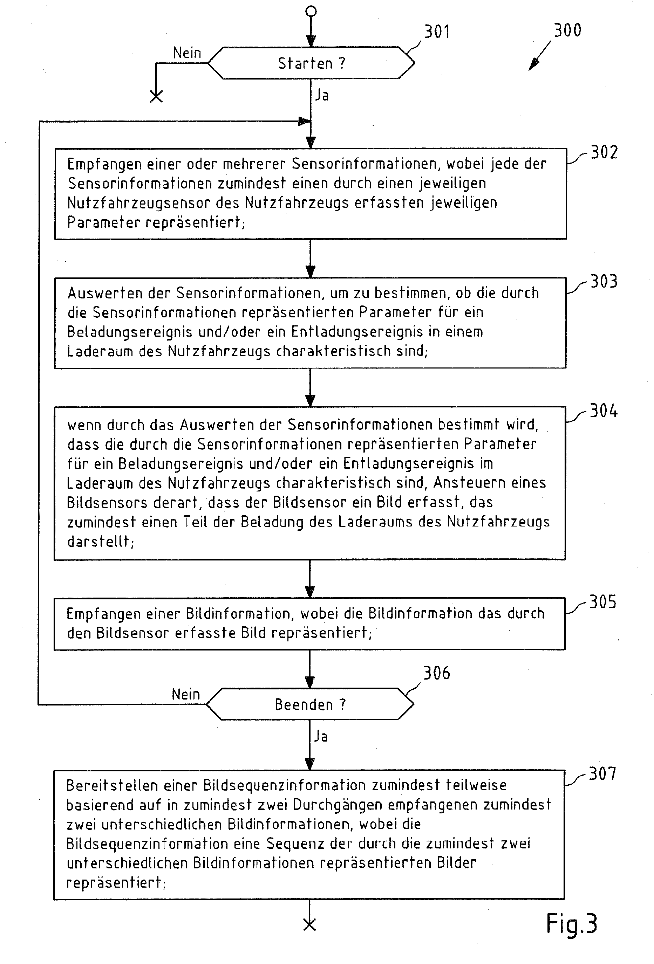

Prozessor 10 führt Programmanweisungen aus, die in Programmspeicher 11 gespeichert sind, und speichert beispielsweise Zwischenergebnisse oder ähnliches in Hauptspeicher 12. Der Programmspeicher 11 enthält beispielsweise Programmanweisungen eines Computerprogramms gemäß dem ersten Aspekt und/oder gemäß dem zweiten Aspekt, das Programmanweisungen umfasst, die den Prozessor 10 veranlassen, das Verfahren gemäß dem ersten Aspekt (z.B. das Verfahren gemäß dem in Fig. 3 dargestellten Ablaufdiagramm 300) und/oder gemäß dem zweiten Aspekt auszuführen, wenn der Prozessor 10 diese in Programmspeicher 11 gespeicherten Programmanweisungen ausführt.

Programmspeicher 11 enthält ferner beispielsweise das Betriebssystem der SVorrichtung 1, das beim Starten der Vorrichtung 1 zumindest teilweise in Hauptspeicher 12 geladen und vom Prozessor 10 ausgeführt wird. Insbesondere wird beim Starten der Vorrichtung 1 zumindest ein Teil des Kerns des Betriebssystems in den Hauptspeicher 12 geladen und von Prozessor 10 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Vorrichtung 1 zur Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 12 und Programmspeicher 11 können auch als ein Speicher ausgebildet sein. Alternativ können Hauptspeicher 12 und/oder Programmspeicher 11 jeweils durch mehrere Speicher gebildet werden. Ferner können Hauptspeicher 12 und/oder Programmspeicher 11 auch Teil des Prozessors 10 sein.

Prozessor 10 steuert die drahtgebundene Kommunikationsschnittstelle 13, welche beispielsweise als CAN-, K-Leitungs-, LIN- oder Flexray-Schnittstelle ausgebildet ist. Sie ist beispielsweise eingerichtet zur drahtgebundenen Kommunikation mit einem oder mehreren Nutzfahrzeugsensoren eines Nutzfahrzeugs (z.B. des in Fig. 2 gezeigten Nutzfahrzeugs 2) über eine oder mehrere drahtgebundene Kommunikationsverbindungen eines CAN-, K-Leitungs-, LIN- oder Flexray-Bussystem des Nutzfahrzeugs. Zum Beispiel kann die Vorrichtung 1 durch die Kommunikationsschnittstelle 13 Sensorinformationen von den Nutzfahrzeugsensoren empfangen. CAN ist in den Standards der ISO 11898-Familie, K-Leitung ist in den Standards ISO 9141 und ISO 14230-1, LIN ist in den Standards der ISO 17987-Familie und FlexRay in den Standards der ISO 17458-Familie spezifiziert.

Außerdem steuert Prozessor 10 die optionale drahtlose Kommunikationsschnittstelle 14, welche beispielsweise als Bluetooth-, WLAN-, GSM-, UMTS- und/oder LTE-Schnittstelle ausgebildet ist. Sie ist beispielsweise eingerichtet zur Kommunikation mit einer oder mehreren entfernten Vorrichtungen wie einem Server oder einem mobilen Gerät wie einem Smartphone. Zum Beispiel kann die Vorrichtung 1 durch die Kommunikationsschnittstelle 14 Informationen (z.B. Bildsequenzinformationen und/oder Ladeprotokollinformationen) an den Server oder das mobile Gerät senden. WLAN ist zum Beispiel in den Standards der IEEE-802.11-Familie spezifiziert. Die GSM-, UMTS- und LTE-Spezifikationen werden von dem 3rd Generation Partnership Project (3GPP) gepflegt und entwickelt und sind derzeit im Internet unter anderem unter www.3gpp.com erhältlich.

Die Komponenten 10 bis 14 der Vorrichtung 1 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Vorrichtung 1 neben den Komponenten 10 bis 14 weitere Komponenten wie beispielsweise eine Benutzerschnittstelle umfassen kann.

Fig. 2 ist eine schematische Darstellung einer beispielhaften Ausführungsform eines Nutzfahrzeugs gemäß der Erfindung. Das Nutzfahrzeug umfasst in Fig. 2 einen Sattelauflieger 2 und ein Zugfahrzeug 3. In dem Sattelauflieger ist eine Vorrichtung 1 angeordnet. Im Folgenden wird beispielhaft davon ausgegangen, dass diese Vorrichtung 1 der in Fig. 1 dargestellten Vorrichtung 1 entspricht.

Im Folgenden wird die beispielhafte Ausführungsform des Sattelaufliegers 2 zunächst anhand von Fig. 2 erläutert. Sattelauflieger 2 umfasst einen Laderaum 20. Der Laderaum 20 des Sattelaufliegers 2 wird oben durch das Laderaumdach 21 und unten durch den Laderaumboden 22 begrenzt. Ferner wird der Laderaum durch die Stirnwand 23 und Rückwand 24 sowie nicht dargestellte seitliche Begrenzungsflächen (z.B. Seitenplanen begrenzt). Die Rückwand 24 wird durch eine nicht dargestellte Flügeltür gebildet. An der Flügeltür ist ein Türöffnungssensor 25 (z.B. ein Türöffnungsschalter) angeordnet, der eingerichtet ist, um zu erfassen, ob die Flügeltür geöffnet oder geschlossen ist, und eine Sensorinformation mit einem entsprechenden Parameter (d.h. ein Parameter, der beispielsweise angibt, ob erfasst wurde, dass die Tür geöffnet ist oder dass die Tür geschlossen ist) über die Verbindung 28 an die Vorrichtung 1 zu senden.

In der Nähe oder an der durch eine Flügeltür gebildeten Rückwand 24 ist ein Betreten- und/oder Verlassenssensor 26 in Form einer Lichtschranke angeordnet. Es versteht sich, dass die Erfindung weder auf eine Lichtschranke als Betreten- und/oder Verlassenssensor 26 noch auf diese Anordnung der Lichtschranke beschränkt ist.

Der Betreten- und/oder Verlassenssensor 26 ist beispielsweise eingerichtet, um zu erfassen, ob ein Objekt (z.B. ein Fahrzeug wie ein Flurförderzeug oder eine Person) den Laderaum betritt oder den Laderaum verlässt, und eine Sensorinformation mit einem entsprechenden Parameter (d.h. ein Parameter, der beispielsweise angibt, ob erfasst wurde, dass ein Objekt den Laderaum betreten hat oder dass ein Objekt den Laderaum verlassen hat) über die Verbindung 28 an die Vorrichtung 1 zu senden.

Ferner umfasst der Sattelauflieger 2 Achslastsensoren 27 (durch ein Viereck dargestellt), die jeweils eingerichtet sind, das auf der jeweiligen Achse des Sattelaufliegers 2 lastende Gewicht (hier beispielhaft symbolisiert durch die Pfeile) zu erfassen und eine Sensorinformation, die das erfasste Gewicht repräsentiert, über die Verbindung 28 an die Vorrichtung 1 zu senden.

Ferner umfasst der Sattelauflieger 2 einen Bildsensor 29 in Form einer Überwachungskamera, die eingerichtet ist, ein Bild, das zumindest einen Teil des Laderaums 20 darstellt, zu erfassen und eine Bildinformation, die das Bild repräsentiert, über die Verbindung 28 an die Vorrichtung 1 zu senden.

Die Verbindung 28 ist beispielsweise eine Kommunikationsverbindung eines CAN-, K-Leitungs-, LIN- oder Flexray Bussystems des Nutzfahrzeugs.

Es versteht sich, dass der Sattelauflieger 2 neben den Nutzfahrzeugsensoren 25, 26, 27 und 28 weitere Nutzfahrzeugsensoren wie beispielsweise einen Positionssensor umfassen kann.

Fig. 3 zeigt ein Flussdiagramm 300 eines Ausführungsbeispiels eines Verfahrens gemäß der Erfindung. Im Folgenden wird beispielhaft angenommen, dass die Schritte 301 bis 307 des Flussdiagramms 300 durch die Vorrichtung 1 des Sattelaufliegers 2 (vgl. Fig. 2) ausgeführt werden. Im Folgenden werden die Schritte 301 bis 307 anhand des in Fig. Gezeigten beispielhaften Ablauf eines Beladungsvorgangs 400 erläutert.

In Schritt 301 kann bestimmt werden, ob eine Startbedingung zum Starten eines ersten Durchgangs der Schritte 302 bis 305 erfüllt ist. Die Startbedingung ist beispielsweise erfüllt, wenn eine Sensorinformation vom Türöffnungssensor 25 empfangen wird, die einen Parameter repräsentiert, der angibt, dass das Öffnen der Laderaumtür in Schritt 401 des Beladungsvorgangs 400 durch den Türöffnungssensor 25 erfasst wurde. Zum Beispiel öffnet ein Verlader die Laderaumtür in Schritt 401 des Beladungsvorgangs 400, um Zugang zum Laderaum 20 zu erhalten.

In Schritt 302 werden eine oder mehrere Sensorinformationen empfangen, wobei jede der Sensorinformationen zumindest einen durch einen jeweiligen Nutzfahrzeugsensor des Nutzfahrzeugs erfassten jeweiligen Parameter repräsentiert. Die Sensorinformationen werden beispielsweise über Verbindung 28 empfangen und in Programmspeicher 11 gespeichert.

Zum Beispiel werden in Schritt 302 Sensorinformationen vom Betreten- und/oder Verlassenssensor 26 und von den Achslastsensoren 27 empfangen, die jeweils während der Schritte 402 bis 404 des Beladungsvorgangs 400 erfasste Parameter repräsentieren. Diese Schritte 402 bis 404 des Beladungsvorgangs 400 sind beispielsweise Schritte eines Beladungsereignisses: Ein mit einer Palette beladener Stapler fährt in den Laderaum 20 (Schritt 402) und stellt die Palette im Laderaum 20 ab (Schritt 403). Anschließend verlässt der unbeladene Stapler den Laderaum 20 (Schritt 404). Das Einfahren des Staplers in Schritt 402 sowie das Verlassen des Laderaums in Schritt 404 kann jeweils durch den Betreten- und/oder Verlassenssensor 26 erfasst werden und entsprechende Sensorinformationen an die Vorrichtung 1 senden; und die Achslastsensoren 27 können jeweils eine Veränderung der Achslast beim Einfahren des Staplers und beim Verlassen erfassen und entsprechende Sensorinformationen an die Vorrichtung 1 senden.

Die empfangenen Sensorinformationen werden in Schritt 303 ausgewertet, um zu bestimmen, ob die durch die Sensorinformationen repräsentierten Parameter für ein Beladungsereignis und/oder ein Entladungsereignis im Laderaum 20 charakteristisch sind.

Das Auswerten in Schritt 303 kann beispielsweise gemeinsam für die in Schritt 302 empfangenen Sensorinformationen anhand eines Auswertungsalgorithmus erfolgen.

Zum Beispiel gibt der Auswertungsalgorithmus vor, dass bestimmt wird, dass die durch die in Schritt 302 empfangenen Sensorinformationen repräsentierten Parameter für ein Beladungsereignis im Laderaum 20 charakteristisch sind, wenn diese Sensorinformationen sowohl vom Betreten- und/oder Verlassenssensor 26 als auch von den Achslastsensoren 27 empfangen wurden und wenn die
(1) vom Betreten- und/oder Verlassenssensor 26 empfangenen Sensorinformationen Parameter repräsentieren, die angeben, dass ein Objekt (z.B. betritt der der Stapler den Laderaum 20 in Schritt 401) den Laderaum betreten und anschließend wieder verlassen (z.B. verlässt der Stapler den Laderaum 20 in Schritt 403) hat, und
(2) von den Achslastsensoren 27 empfangenen Sensorinformationen Parameter repräsentieren, die angeben, dass das Objekt beim Betreten (in Schritt 401 ist der Stapler beladen) schwerer war als beim Verlassen (in Schritt 403 ist der Stapler unbeladen) war.

Eine solche Vorgabe hat beispielsweise zur Folge, dass nach jedem Durchgang der Schritte 402 bis 404 bestimmt wird, dass die vom Betreten- und/oder Verlassenssensor 26 und von den Achslastsensoren 27 während des jeweiligen Durchgangs der Schritte 402 bis 404 empfangenen Sensorinformationen für ein Beladungsereignis im Laderaum 20 charakteristisch sind.

Gleichermaßen kann der Auswertungsalgorithmus beispielsweise vorgeben, dass bestimmt wird, dass die durch die in Schritt 302 empfangenen Sensorinformationen repräsentierten Parameter für ein Entladungsereignis im Laderaum 20 charakteristisch sind, wenn diese Sensorinformationen sowohl vom Betreten- und/oder Verlassenssensor 26 als auch von den Achslastsensoren 27 empfangen wurden und wenn die
(1) vom Betreten- und/oder Verlassenssensor 26 empfangenen Sensorinformationen Parameter repräsentieren, die angeben, dass ein Objekt (z.B. ein Stapler) den Laderaum betreten und anschließend wieder verlassen hat, und
(2) von den Achslastsensoren 27 empfangenen Sensorinformationen Parameter repräsentieren, die angeben, dass das Objekt beim Betreten (z.B. ist der Stapler beim Betreten unbeladen) leichter war als beim Verlassen (z.B. ist der Stapler beim Verlassen beladen) war.

Wenn durch das Auswerten der Sensorinformationen in Schritt 303 bestimmt wird, dass die durch die Sensorinformationen repräsentierten Parameter für ein Beladungsereignis und/oder ein Entladungsereignis im Laderaum 20 charakteristisch sind, wird in Schritt 304 ein Bildsensor derart angesteuert, dass der Bildsensor ein Bild erfasst, das zumindest einen Teil der Beladung des Laderaums 20 darstellt. Zum Beispiel kann der Bildsensor 29 in Schritt 304 angesteuert werden, um ein Bild zu erfassen, das zumindest einen Teil der Beladung des Laderaums 20 darstellt.

Wenn beispielsweise nach jedem Durchgang der Schritte 402 bis 404 bestimmt wird, dass die vom Betreten- und/oder Verlassenssensor 26 und von den Achslastsensoren 27 während des jeweiligen Durchgangs 402 bis 404 empfangenen Sensorinformationen für ein Beladungsereignis im Laderaum 20 charakteristisch sind, wird anschließend beispielsweise der Bildsensor 29 angesteuert, um ein Bild zu erfassen, das die Beladung nach dem jeweiligen Beladungsereignisses mit den jeweiligen Schritten 402 bis 404 darstellt. Mit anderen Worten stellt das jeweilige Bild ein Ergebnis des jeweiligen Beladungsereignisses dar, so dass das Ergebnis des jeweiligen Beladungsereignisses des jeweiligen Bilds geprüft werden kann. Zum Beispiel kann anhand eines solchen Bildes geprüft werden, ob die im Rahmen des jeweiligen Beladungsereignisses im Laderaum abgestellte Palette ordnungsgemäß platziert und gesichert wurde.

In Schritt 305 wird eine Bildinformation empfangen, die das durch den Bildsensor in Schritt 304 erfasste Bild repräsentiert. Die Bildinformation wird beispielsweise über Verbindung 28 empfangen und in Programmspeicher 11 gespeichert.

In einem Schritt 306 kann bestimmt werden, ob eine Abbruchbedingung erfüllt ist. Die Abbruchbedingung ist beispielsweise erfüllt, wenn eine Sensorinformation vom Türöffnungssensor 25 empfangen wird, die einen Parameter repräsentiert, der angibt, dass das Schließen der Laderaumtür in Schritt 405 des Beladungsvorgangs 400 durch den Türöffnungssensor 25 erfasst wurde. Zum Beispiel schließt der Verlader die Laderaumtür in Schritt 405 des Beladungsvorgangs 400, um den Laderaum 20 zu verschließen.

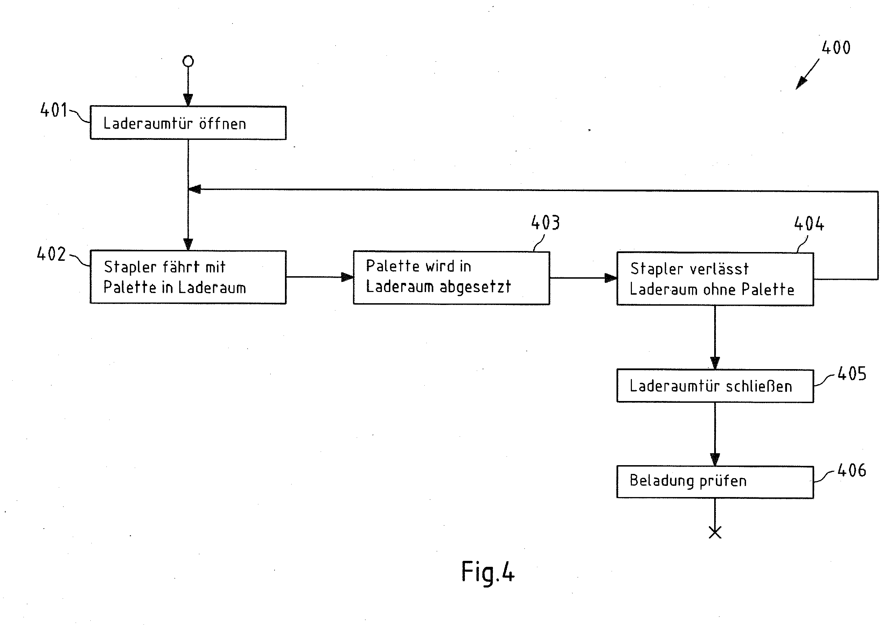

Solange die Abbruchbedingung nicht erfüllt ist, beginnt ein weiterer Durchgang der Schritte 302 bis 305. Wie in Fig. 4 angedeutet, umfasst der Beladungsvorgangs 400 mehrere Durchgänge der Schritt 402 bis 404, so dass auch mehrere Durchgänge der Schritte 302 bis 305 erfolgen bevor die Abbruchbedingung erfüllt ist.

Wenn die Abbruchbedingung erfüllt ist, endet der letzte Durchgang der Schritte 302 bis 305.

Das offenbarte Verfahren gemäß dem ersten Aspekt setzt voraus, dass zumindest zwei Durchgänge der Schritte 302 bis 305 erfolgen, so dass in den zumindest zwei Durchgängen zumindest zwei unterschiedliche Bildinformationen empfangen werden, die zwei unterschiedliche Bilder repräsentieren, die eine unterschiedliche Beladung des Laderaums darstellen.

Wie oben offenbart, können die Bilder beispielsweise derart erfasst, dass sie die Beladung nach dem jeweiligen Beladungsereignisses mit den jeweiligen Schritten 402 bis 404 darstellt. Dass die zwei unterschiedlichen Bilder eine unterschiedliche Beladung des Laderaums darstellen, kann somit beispielsweise derart verstanden werden, dass sie die Ergebnisse unterschiedlicher Beladungsereignisse (d.h. unterschiedlicher Durchgänge der Schritte 402 bis 404, bei denen unterschiedliche Paletten an unterschiedlichen Plätzen des Laderaums 20 abgesetzt wurden) darstellen.

In Schritt 307 wird eine Bildsequenzinformation zumindest teilweise basierend auf den in den zumindest zwei Durchgängen empfangenen zumindest zwei unterschiedlichen Bildinformationen bereitgestellt, wobei die Bildsequenzinformation eine Sequenz der durch die zumindest zwei unterschiedlichen Bildinformationen repräsentierten Bilder repräsentiert. Ferner können in Schritt 307 beispielsweise auch Ladeprotokollinformation zumindest teilweise basierend auf den in den zumindest zwei Durchgängen empfangenen Sensorinformationen bereitgestellt werden, wobei die Be- und/oder Entladevorgangsprotokollinformation zumindest die Sensorinformationen umfasst, für die bestimmt wurde, dass sie charakteristisch für ein Beladungsereignis und/oder ein Entladungsereignis sind.

Die durch die Bildsequenzinformation repräsentierte Sequenz der Bilder umfasst die Bilder beispielsweise in der zeitlichen Abfolge, in der sie in jeweiligen Schritt 304 des jeweiligen Durchgangs der Schritte 302 bis 305 erfasst wurden. Wie oben offenbart, werden die Bilder beispielsweise nach jedem der Durchgänge der Schritte 402 und 404 erfasst, so dass sie ein Ergebnis des jeweiligen Beladungsereignisses darstellen. Mit anderen Worten ist auf jedem der Bilder eine weitere - nämlich die zuletzt abgesetzte - Palette zu sehen. Anhand einer solchen Bildsequenz der im Rahmen des Beladungsvorgangs 400 erfassten Bilder lässt sich der Beladungsvorgang 400 somit als Sequenz von Einzelbilder ähnlich wie bei einem "Daumenkino" nachvollziehen und überwachen.

Das Bereitstellen der Bildsequenzinformation in Schritt 307 kann beispielsweise durch die Kommunikationsschnittstelle 14 erfolgen. Zum Beispiel kann die Vorrichtung 1 die Bildsequenzinformation in Schritt 307 an einem Server oder ein mobiles Gerät senden, so dass ein Benutzer sich die Bildsequenz anzeigen lassen und den Beladungsvorgang 400 anhand der Bildsequenz überwachen und die Beladung prüfen kann, wie es als letzter Schritt 406 des Beladungsvorgangs 400 in Fig. 4 vorgesehen ist.

Es versteht sich, dass das Verfahren gemäß dem ersten Aspekt nicht auf die oben in Zusammenhang mit den Fig. 3 und 4 offenbarten Abläufe und Schritte beschränkt ist. Zum Beispiel kann zusätzlich vorgesehen sein, dass der Bildsensor angesteuert wird, um ein Bild zu erfassen, wenn in den Schritte 301 und 306 bestimmt wird, dass eine Startbedingung oder eine Abbruchbedingung erfüllt ist. Die dabei erfassten Bilder können beispielsweise ebenfalls Teil der Bildsequenz sein.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

## Patentansprüche

1. Verfahren, wobei das Verfahren zumindest zwei Durchgänge der folgenden Schritte umfasst:
- Empfangen (302) einer oder mehrerer Sensorinformationen, wobei jede der Sensorinformationen zumindest einen durch einen jeweiligen Nutzfahrzeugsensor (25, 26, 27) eines Nutzfahrzeugs erfassten jeweiligen Parameter repräsentiert;
- Auswerten (303) der Sensorinformationen, um zu bestimmen, ob die durch die Sensorinformationen repräsentierten Parameter für ein Beladungsereignis und/oder ein Entladungsereignis in einem Laderaum (20) des Nutzfahrzeugs charakteristisch sind;
- wenn durch das Auswerten der Sensorinformationen bestimmt wird, dass die durch die Sensorinformationen repräsentierten Parameter für ein Beladungsereignis und/oder ein Entladungsereignis im Laderaum des Nutzfahrzeugs charakteristisch sind, Ansteuern (304) eines Bildsensors (29) derart, dass der Bildsensor ein Bild erfasst, das zumindest einen Teil der Beladung des Laderaums des Nutzfahrzeugs darstellt;
- Empfangen (305) einer Bildinformation, wobei die Bildinformation das durch den Bildsensor erfasste Bild repräsentiert;
wobei in den zumindest zwei Durchgängen zumindest zwei unterschiedliche Bildinformationen empfangen werden, und wobei die zumindest zwei unterschiedlichen Bildinformationen zwei unterschiedliche Bilder repräsentieren, die eine unterschiedliche Beladung des Laderaums darstellen.

2. Verfahren nach Anspruch 1, wobei das Verfahren ferner umfasst:
- Bereitstellen (307) einer Bildsequenzinformation zumindest teilweise basierend auf den in den zumindest zwei Durchgängen empfangenen zumindest zwei unterschiedlichen Bildinformationen, wobei die Bildsequenzinformation eine Sequenz der durch die zumindest zwei unterschiedlichen Bildinformationen repräsentierten Bilder repräsentiert.

3. Verfahren nach einem der Ansprüche 1 und 2, wobei das Verfahren ferner umfasst:
- Bereitstellen einer Ladeprotokollinformation zumindest teilweise basierend auf den in den zumindest zwei Durchgängen empfangenen Sensorinformationen, wobei die Be- und/oder Entladevorgangsprotokollinformation zumindest die Sensorinformationen umfasst, für die bestimmt wurde, dass sie charakteristisch für ein Beladungsereignis und/oder ein Entladungsereignis sind.

4. Verfahren nach einem der Ansprüche 1 bis 3, wobei das Beladungsereignis die folgenden Schritte umfasst:
- Einfahren (402) eines mit einem ersten Ladegut beladenen Flurförderzeugs in den Laderaum des Nutzfahrzeugs;
- Abladen (403) des ersten Ladeguts in den Laderaum des Nutzfahrzeugs;
- Ausfahren (404) des unbeladenen Flurförderzeugs aus dem Laderaum des Nutzfahrzeugs.

5. Verfahren nach einem der Ansprüche 1 bis 4, wobei das Entladungsereignis die folgenden Schritte umfasst:
- Einfahren eines unbeladenen Flurförderzeugs in den Laderaum des Nutzfahrzeugs;
- Beladen des Flurförderzeugs mit einem in dem Laderaum des Nutzfahrzeuges befindlichen zweiten Ladeguts;
- Ausfahren des mit dem zweiten Ladegut beladenen Flurförderzeugs aus dem Laderaum des Nutzfahrzeugs.

6. Verfahren nach einem der Ansprüche 4 und 5, wobei die durch die Sensorinformationen repräsentierten Parameter charakteristisch für einen oder mehrere der Schritte des Beladungsereignisses und/oder des Entladungsereignisses sind.

7. Verfahren nach einem der Ansprüche 1 bis 6, wobei die durch die Sensorinformationen repräsentierten Parameter zumindest teilweise durch zumindest einen der folgenden Nutzfahrzeugsensoren erfasst werden:
- Türöffnungssensor;
- Bewegungssensor;
- Balgdrucksensor;
- Fahrhöhensensor;
- Gewichtssensor;
- Bildsensor;
- Betreten- und/oder Verlassenssensor.

8. Verfahren nach einem der Ansprüche 1 bis 7, wobei die Sensorinformationen und/oder die Bildinformation in den zumindest zwei Durchgängen über eine Kommunikationsverbindung eines Bussystems des Nutzfahrzeugs empfangen werden.

9. Verfahren nach Anspruch 8, wobei das Bussystem eine Datenübertragungsrate von nicht mehr als 1,5 Mbit/s oder 1 Mbit/s oder 500 kbit/s oder 150 kbit/s oder 125 kbit/s unterstützt, und/oder wobei das Bussystem ein CAN-, K-Leitungs-, LIN- oder Flexray-Bussystem ist.

10. Verfahren nach einem der Ansprüche 1 bis 9, wobei der erste der zumindest zwei Durchgänge startet, wenn eine Sensorinformation empfangen wird, die einen Parameter repräsentiert, der angibt, dass ein Türöffnungssensor (25) erfasst hat, dass eine Tür des Laderaums geöffnet (401) wurde; und/oder wobei der letzte der zumindest zwei Durchgänge endet, wenn eine Sensorinformation empfangen wird, die einen Parameter repräsentiert, der angibt, dass ein Türöffhungssensor (25) erfasst hat, dass eine Tür des Laderaums geschlossen (405) wurde.

11. Verfahren nach einem der Ansprüche 1 bis 10, wobei das Verfahren durch eine Vorrichtung (1) oder durch mehrere miteinander kooperierende Vorrichtungen ausgeführt wird.

12. Verfahren nach einem der Ansprüche 1 bis 11, wobei das Nutzfahrzeug ein Lastkraftwagen, ein Anhänger, ein Sattelauflieger oder ein Zuggespann ist.

13. Computerprogramm, umfassend Programmanweisungen, die dazu ausgebildet sind, bei Ausführung durch mindestens einen Prozessor eine Vorrichtung zu veranlassen, das Verfahren nach einem der Ansprüche 1 bis 12 auszuführen

14. Vorrichtung (1) oder mehrere miteinander kooperierende Vorrichtungen umfassend Mittel (10-14) eingerichtet zur Ausführung des Verfahrens nach einem der Ansprüche 1 bis 12.

15. Nutzfahrzeug (2, 3), umfassend:
- einen Laderaum (20);
- einen oder mehrere Nutzfahrzeugsensoren (25, 26, 27);
- einen Bildsensor (29);
- eine Vorrichtung (1) oder mehrere miteinander kooperierende Vorrichtungen umfassend Mittel (10-14) eingerichtet zur Ausführung des Verfahrens nach einem der Ansprüche 1 bis 12.

## Geänderte Patentansprüche

### Geänderte Patentansprüche gemäss Regel 137(2) EPÜ.

1. Verfahren, wobei das Verfahren zumindest zwei Durchgänge der folgenden Schritte umfasst:
- Empfangen (302) einer oder mehrerer Sensorinformationen, wobei jede der Sensorinformationen zumindest einen durch einen jeweiligen Nutzfahrzeugsensor (25, 26, 27) eines Nutzfahrzeugs erfassten jeweiligen Parameter repräsentiert;
- Auswerten (303) der Sensorinformationen, um zu bestimmen, ob die durch die Sensorinformationen repräsentierten Parameter für ein Beladungsereignis und/oder ein Entladungsereignis in einem Laderaum (20) des Nutzfahrzeugs charakteristisch sind;
- wenn durch das Auswerten der Sensorinformationen bestimmt wird, dass die durch die Sensorinformationen repräsentierten Parameter für ein Beladungsereignis und/oder ein Entladungsereignis im Laderaum des Nutzfahrzeugs charakteristisch sind, Ansteuern (304) eines Bildsensors (29) derart, dass der Bildsensor ein Bild erfasst, das zumindest einen Teil der Beladung des Laderaums des Nutzfahrzeugs darstellt;
- Empfangen (305) einer Bildinformation, wobei die Bildinformation das durch den Bildsensor erfasste Bild repräsentiert;
wobei in den zumindest zwei Durchgängen zumindest zwei unterschiedliche Bildinformationen empfangen werden, und wobei die zumindest zwei unterschiedlichen Bildinformationen zwei unterschiedliche Bilder repräsentieren, die eine unterschiedliche Beladung des Laderaums darstellen.

2. Verfahren nach Anspruch 1, wobei das Verfahren ferner umfasst:
- Bereitstellen (307) einer Bildsequenzinformation zumindest teilweise basierend auf den in den zumindest zwei Durchgängen empfangenen zumindest zwei unterschiedlichen Bildinformationen, wobei die Bildsequenzinformation eine Sequenz der durch die zumindest zwei unterschiedlichen Bildinformationen repräsentierten Bilder repräsentiert.

3. Verfahren nach einem der Ansprüche 1 und 2, wobei das Verfahren ferner umfasst:
- Bereitstellen einer Ladeprotokollinformation zumindest teilweise basierend auf den in den zumindest zwei Durchgängen empfangenen Sensorinformationen, wobei die Be- und/oder Entladevorgangsprotokollinformation zumindest die Sensorinformationen umfasst, für die bestimmt wurde, dass sie charakteristisch für ein Beladungsereignis und/oder ein Entladungsereignis sind.

4. Verfahren nach einem der Ansprüche 1 bis 3, wobei das Beladungsereignis die folgenden Schritte umfasst:
- Einfahren (402) eines mit einem ersten Ladegut beladenen Flurförderzeugs in den Laderaum des Nutzfahrzeugs;
- Abladen (403) des ersten Ladeguts in den Laderaum des Nutzfahrzeugs;
- Ausfahren (404) des unbeladenen Flurförderzeugs aus dem Laderaum des Nutzfahrzeugs.

5. Verfahren nach einem der Ansprüche 1 bis 4, wobei das Entladungsereignis die folgenden Schritte umfasst:
- Einfahren eines unbeladenen Flurförderzeugs in den Laderaum des Nutzfahrzeugs;
- Beladen des Flurförderzeugs mit einem in dem Laderaum des Nutzfahrzeuges befindlichen zweiten Ladeguts;
- Ausfahren des mit dem zweiten Ladegut beladenen Flurförderzeugs aus dem Laderaum des Nutzfahrzeugs.

6. Verfahren nach einem der Ansprüche 4 und 5, wobei die durch die Sensorinformationen repräsentierten Parameter charakteristisch für einen oder mehrere der Schritte des Beladungsereignisses und/oder des Entladungsereignisses sind.

7. Verfahren nach einem der Ansprüche 1 bis 6, wobei die durch die Sensorinformationen repräsentierten Parameter zumindest teilweise durch zumindest einen der folgenden Nutzfahrzeugsensoren erfasst werden:
- Türöffnungssensor;
- Bewegungssensor;
- Balgdrucksensor;
- Fahrhöhensensor;
- Gewichtssensor;
- Bildsensor;
- Betreten- und/oder Verlassenssensor.

8. Verfahren nach einem der Ansprüche 1 bis 7, wobei die Sensorinformationen und/oder die Bildinformation in den zumindest zwei Durchgängen über eine Kommunikationsverbindung eines Bussystems des Nutzfahrzeugs empfangen werden.

9. Verfahren nach Anspruch 8, wobei das Bussystem eine Datenübertragungsrate von nicht mehr als 1,5 Mbit/s oder 1 Mbit/s oder 500 kbit/s oder 150 kbit/s oder 125 kbit/s unterstützt, und/oder wobei das Bussystem ein CAN-, K-Leitungs-, LIN- oder Flexray-Bussystem ist.

10. Verfahren nach einem der Ansprüche 1 bis 9, wobei der erste der zumindest zwei Durchgänge startet, wenn eine Sensorinformation empfangen wird, die einen Parameter repräsentiert, der angibt, dass ein Türöffnungssensor (25) erfasst hat, dass eine Tür des Laderaums geöffnet (401) wurde; und/oder wobei der letzte der zumindest zwei Durchgänge endet, wenn eine Sensorinformation empfangen wird, die einen Parameter repräsentiert, der angibt, dass ein Türöffnungssensor (25) erfasst hat, dass eine Tür des Laderaums geschlossen (405) wurde.

11. Verfahren nach einem der Ansprüche 1 bis 10, wobei das Verfahren durch eine Vorrichtung (1) oder durch mehrere miteinander kooperierende Vorrichtungen ausgeführt wird.

12. Verfahren nach einem der Ansprüche 1 bis 11, wobei das Nutzfahrzeug ein Lastkraftwagen, ein Anhänger, ein Sattelauflieger oder ein Zuggespann ist.

13. Computerprogramm,
**dadurch gekennzeichnet, dass**
das Computerprogramm Programmanweisungen umfasst, die dazu ausgebildet sind, bei Ausführung durch mindestens einen Prozessor eine Vorrichtung zu veranlassen, das Verfahren nach einem der Ansprüche 1 bis 12 auszuführen

14. Vorrichtung (1) oder mehrere miteinander kooperierende Vorrichtungen umfassend Mittel (10-14) eingerichtet zur Ausführung des Verfahrens nach einem der Ansprüche 1 bis 12.

15. Nutzfahrzeug (2, 3), umfassend:
- einen Laderaum (20);
- einen oder mehrere Nutzfahrzeugsensoren (25, 26, 27);
- einen Bildsensor (29);
**dadurch gekennzeichnet, dass**
- das Nutzfahrzeug (2, 3) eine Vorrichtung (1) oder mehrere miteinander kooperierende Vorrichtungen umfassend Mittel (10-14) eingerichtet zur Ausführung des Verfahrens nach einem der Ansprüche 1 bis 12 umfasst.
